# EUROPEAN PATENT APPLICATION

(11) **EP 1 713 211 A1**
(43) Date of publication of application: **18.10.2006**
(21) Application number: 05709642.2
(22) Date of filing: 02.02.2005
(51) Int. Cl.: H04L 12/56

(54) **METHOD AND SYSTEM FOR DETECTING NETWORK CONNECTION IN IPv6 RADIO ACCESS NETWORK**

(30) Priority: 06.02.2004 JP 2004031422
(71) Applicant: Matsushita Electric Industrial Co., Ltd., Kadoma-shi Osaka 571-8501 (JP)
(72) Inventor: CHEN, Zhigao., c/o Matsushita el.Ind.CO.Ltd, Chuo-ku, Osaka 540-6319 (JP); LOH, Juh, Khang., c/o Matsushita El.Ind.CO.Ltd, Chuo-ku, Osaka 540-6319 (JP)
(74) Representative: Grünecker, Kinkeldey, Stockmair & Schwanhäusser Anwaltssozietät
(86) International application number: PCT/JP2005/001522
(87) International publication number: WO 2005/076547

(57) **Abstract**

The technology is disclosed to attain the prompt processing and reduction of signaling volume in network attachment detection for IPv6 wireless access networks. According to this technology, a mobile node reports the identifier of a new wireless access point to its on-link access routers (ARs) and the ARs disseminate the identifiers of all the reported access points (APID List) to MNs. With the identifiers information, the MN is able to speculate it remains in the same subnet or moved back to a previously visited subnet, where its current or previous address configuration can be reused respectively. The speculation is ascertained by parallelly performing reachability test and duplicate address detection, if necessary. The reachability test is done in a unicast manner so as to conserve wireless link bandwidth.

## Description

### TECHNICAL FIELD

The present invention relates to the technology to provide network attachment detection (network connection detection) for IPv6 wireless access networks (IPv6 radio access network).

### BACKGROUND ART

Nowadays, mobile computing is getting popular. More and more mobile nodes (MNs) obtain Internet access through wireless access networks, such as Wireless LAN, Bluetooth, GPRS (General Packet Radio System), UWB (Ultra Wide Band) and etc. A wireless access network typically comprises one or more access routers (ARs) and several access points APs. An access point is a L2 entity extending a L2 link in a wired network over a wireless link. As the gateway of the wireless access network to the Internet, an access router forwards IP packets for mobile nodes. One AR is connected to one or multiple APs.

Network attachment happens when a L2 link between a node and its access network is established (or reestablished). For instance, a laptop computer comes back into the coverage of a radio cell due to the movement. Because the radio coverage provided by an AP is limited, a MN has to change its point of attachment from one AP to another while moving. Rapid network attachment detection is desirable especially when a MN with ongoing sessions intermittently changes an AP or a MN has urgent data to send out upon attaching to a new AP.

Two IETF (Internet Engineering Task Force) specifications (the following Non-Patent Document 1 and 2) describe how MNs gain network access through auto-configuration of an IPv6 address from an access network and prefix discovery.
[Non-Patent Document 1] "Neighbor Discovery for IP version 6 (IPv6)", IETF RFC 2461, Dec 1998.
[Non-Patent Document 2] "IPv6 Stateless Address Configuration", IETF RFC 2462, Dec 1998.

However, the latency spent in normal IP address (IPv6 address) auto-configuration procedures, i.e. Duplicate Address Detection (DAD) followed by waiting for a Router Advertisement (RA), is unfavorable to the service continuity of ongoing sessions, and the auto-configuration procedures have to be carried out each time AP changes. Although Non-Patent Document 2 mentions the waiting for an RA can be performed in parallel with DAD, the Router Solicitation (RS) and RA messages used in router discovery and prefix discovery have to be sent both in a multicast manner. That is because a mobile node has no knowledge of what unicast address as well as what default AR can be used before the completion of DAD. Excessive multicast traffic is undesirable especially in a wireless link, which features scarce bandwidth and high loss rate.

As a matter of fact, an AP change is not tantamount to a subnet change. More often a MN still stays in the same subnet, and hence it can continue to use its current IPv6 address and default AR. Accordingly, some address configuration procedures are redundant and can be skipped or shortened. Likewise, the MN may move across two subnets frequently. Therefore, it is important for MNs to detect whether an attached subnet is new or has already been visited, where current or previous address configuration is still valid.

Once a L2 link between a MN and an AP is established, the identity of the AP (APID) is generally visible to MN in a L2 LinkUp hint. The information is useful in helping the MN efficiently detecting network attachment (DNA), specifically in speculating subnet change. To ascertain the reusability of an address configuration, the reachability test of default router and the validity of IP address are commonly believed to be required.

### DISCLOSURE OF THE INVENTION

The present invention proposes a fast network attachment detection method and system with less volume of signaling messages for IPv6 wireless access networks. A MN can utilize this method or system to reuse, if possible, its current or previous IP address configuration shortly after an AP change. This method consists of two procedures, namely APID discovery and dissemination, reusability speculation and ascertainment.

A MN discovers any new APID upon attaching to an AP and reports it to the ARs on the link using a multicast RS. The ARs in turn disseminate the identifiers of all its on-link APs (APID List). MNs store the APIDs disseminated by its Previous Default AR (PreDefAR) and Current Default AR (CurDefAR) in an APID Cache while moving. The CurDefAR is defined as the default AR used by a MN prior to an AP change (AP change of this time). The PreDefAR is defined as the default AR used by the MN prior to the last AP change (AP change of the last time). The term "current" means before the AP change of this time, and a current subnet or current address configuration means a subnet or address configuration used before the AP change of this time. The term "previous" means before the AP change of the last time, and a previous subnet or previous address configuration means a subnet or address configuration used before the AP change of the last time.

A MN speculates it remains in the current subnet or moved back to the previous subnet when the APID of a newly established link is found in its APID Cache. It then initiates a reachability test with its PreDefAR or CurDefAR and meanwhile starts Optimistic DAD (See draft-moore-ipv6-optimistic-dad-03.txt in IETF), if necessary, to ascertain the reusability of the existing address configuration. If ascertained, the address configuration is used by the MN to obtain Internet connectivity immediately without a need to acquire a new one.

One key point of the present invention is that DAD and reachability test as well as getting the latest prefix(es) and other configuration parameters are done parallely but the involved RS/RA messages are sent in unicast rather than multicast. This is because a recognized APID provides the MN with justification to use an existing unicast address to exchange RS/RA with its PreDefAR/CurDefAR only. Moreover, a smaller RetransTimer is used in the Optimistic DAD as the possibility of address duplication is less than that in a never-visited subnet. As a result, network attachment detection is accelerated.

In a nutshell, MNs gather attachment point information during the first visit of an AP in an attempt to recognize them during their subsequent visits. The APID information justifies the optimization of network attachment detection in terms of expediting procedures and reducing signaling volume.

It is also the objective of the present invention to provide a conceptual model of how the APID Cache and the APID List are organized, updated and purged to achieve storage saving.

The present invention enables detecting as promptly as possible whether a MN is still connected to the same subnet or connected to the different subnet after the MN changes a wireless link, and utilizing information on the currently used subnet connection or previously used subnet according to the behavior of the link change. The present invention has the advantage of attaining fast processing on network attachment detection for IPV6 wireless access networks and reduction of signaling volume.

### BRIEF DESCRIPTION OF THE DRAWINGS

Fig. 1A is a diagram showing a layout of a single-link wireless access network and a multiple-link wireless access network and MN's possible movements in these network compositions in the embodiment of the present invention, and showing a situation where there are AP1 and AP2 on the same link;
Fig. 1B is a diagram showing a layout of a single-link wireless access network and a multiple-link wireless access network and MN's possible movements in these network compositions in the embodiment of the present invention, and showing a situation where there are AP3 and AP4 on separate links;
Fig. 2 is a signaling diagram showing the APID discovery and dissemination procedures for two movements ("Movement 1" and "Movement 5"); in the embodiment of the present invention;
Fig. 3 is a signaling diagram showing normal DNA procedure and a subsequent APID discovery and dissemination procedure for two other movements ("Movement 4" and "Movement 7") in the embodiment of the present invention;
Fig. 4 is a signaling diagram showing the reachability test and reusability ascertainment procedures for three other movements ("Movement 2", "Movement 3" and "Movement 6"), which benefit from the DNA method in the embodiment of the present invention;
Fig. 5 is a flowchart summarizing the additional operations, which a MN shall perform to realize the DNA method, when the MN received a multicast RA with an APID List in the embodiment of the present invention;
Fig. 6 is a flowchart summarizing the additional operations, which a MN shall perform to realize the DNA method, when the MN received a L2 LinkUp hint in the embodiment of the present invention;
Fig. 7 is a flowchart summarizing the additional operations, which a MN shall perform to realize the DNA method, when the MN received a unicast RA with R and S bits in the embodiment of the present invention;
Fig. 8 is a flowchart summarizing the additional operations, which a MN shall perform to realize the DNA method, when the MN received a unicast RA with an APID List in the embodiment of the present invention;
Fig. 9 is a flowchart summarizing the additional operations, which an AR shall perform to realize the DNA method, when the AR received a multicast RS with an APID and CurDefAR address in the embodiment of the present invention;
Fig. 10 is a flowchart summarizing the additional operations, which an AR shall perform to realize the DNA method, when the AR received a unicast RS with an APID in the embodiment of the present invention;
Fig. 11 is a flowchart summarizing the additional operations, which an AR shall perform to realize the DNA method, when the AR received a unicast RS without an APID in the embodiment of the present invention; and
Fig. 12 is a diagram illustrating the structure of an APID Cache on a MN in the embodiment of the present invention.

### BEST MODE FOR CARRYING OUT THE INVENTION

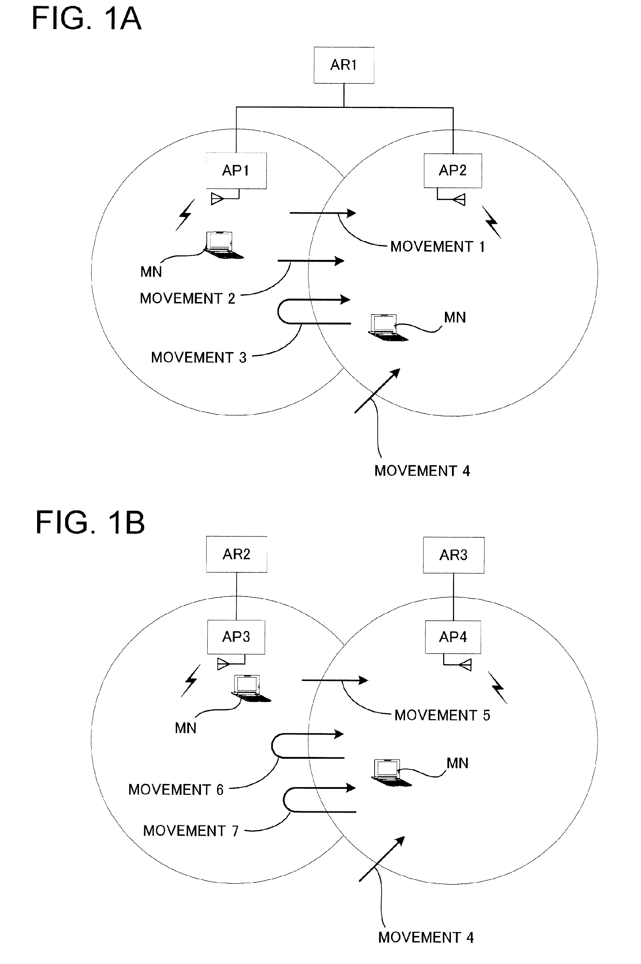

Description will be given below on the embodiment of the present invention referring to the drawings. Fig. 1A and 1B illustrate situations respectively, where AP1 and AP2 are on the same link of a single-link wireless access network, whereas AP3 and AP4 are on different links of a multiple-link wireless access network. Hereinafter, the main movements are classified into the followings.

"Movement 1" (see Fig. 1A) : The first visit to an unknown AP on the same link. A MN attaches to AP2 for the very first time. The APID of AP2 is not found in its APID Cache. AR1 is the MN's CurDefAR.

"Movement 2" (see Fig. 1A) : The first visit to a known AP on the same link. A MN attaches to AP2 for the very first time. The APID of AP2 is found in its APID Cache, which may be because the MN has received an APID List including the APID of AP2 before the movement. AR1 is the MN's CurDefAR.

"Movement 3" (see Fig. 1A) : The subsequent visit to an AP on the same link. A MN switched AP attachment from AP2 to AP1 and then attaches to AP2 again. The APID of AP2 is found in its APID Cache. AR1 is the MN's CurDefAR and PreDefAR.

"Movement 4" (see Figs. 1A and 1B) : The first visit to an AP from a state without connectivity. A MN moves from a non-coverage area or initiates its radio interface and then attaches to an AP (AP2 in Fig. 1A or AP4 in Fig. 1B). The APID is not found in its APID Cache.

"Movement 5" (see Fig. 1B) : The first visit to an AP on a different link. A MN attaches to AP4 for the very first time. The APID of AP4 is not found in its APID Cache. AR2 is the MN's CurDefAR.

"Movement 6" (see Fig. 1B) : The subsequent visit to a known AP on a different link. A MN switched AP attachment from AP4 to AP3 and then attaches to AP4 again. The APID of AP4 is found in its APID Cache. AR2 is the MN's CurDefAR, and AR3 is the MN's PreDefAR.

"Movement 7" (see Fig. 1B) : The subsequent visit to an unknown AP on a different link. A MN switched AP attachment from AP4 to AP3 and then attaches to AP4 again. The APID of AP4 is not found in its APID Cache, which may be because the MN has kept attached to AP3 for so long that the APID entry has expired. AR2 is the MN's CurDefAR, and AR3 is the MN's PreDefAR.

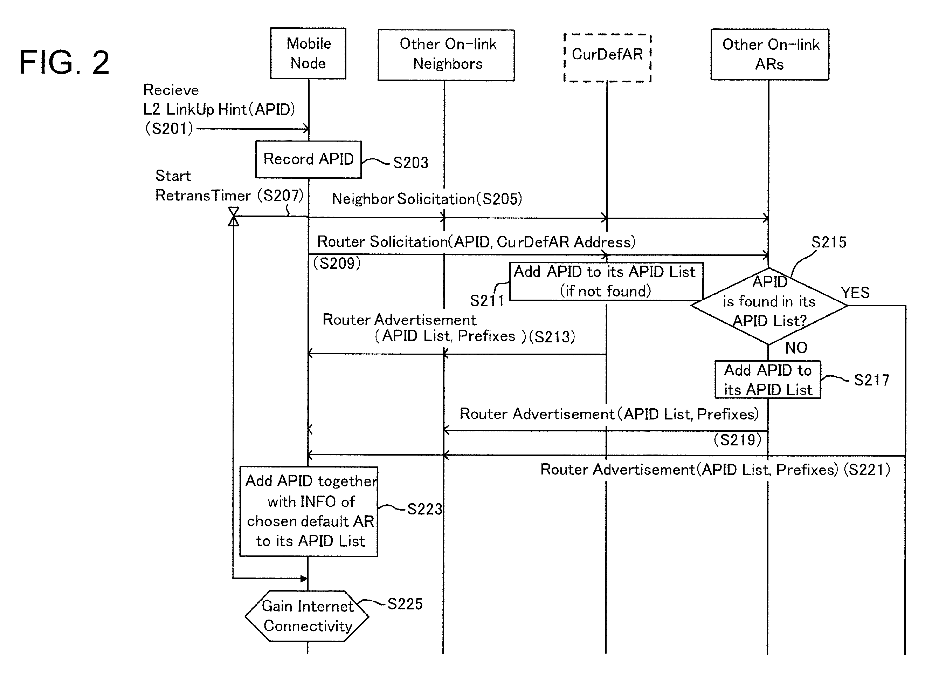

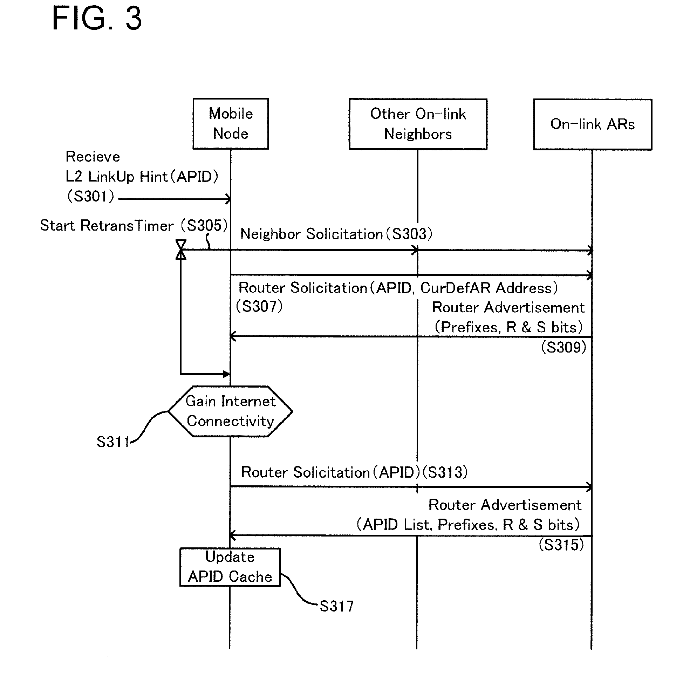

For "Movement 1", "Movement 4", "Movement 5" and "Movement 7", the unknown APID should be reported. With a known APID recognized, "Movement 2", "Movement 3" and "Movement 6" are able to detect network attachment quickly. Fig. 2 shows how APID is discovered and disseminated for "Movement 1" and "Movement 5" whereas Fig. 3 is the signaling diagram of the procedures for "Movement 4" and "Movement 7".

In Fig. 2, when the L2 link between a MN (Mobile Node) and a new AP is established, a MN receives a L2 LinkUp hint (step S201) carrying the APID of the AP. In Fig. 2, the MN records this APID in preparation for creating a new APID Cache entry (step S203). The MN performs DAD by multicasting a Neighbor Solicitation (NS) to on-link neighbors (step S205) and starting a RetransTimer (step S207).

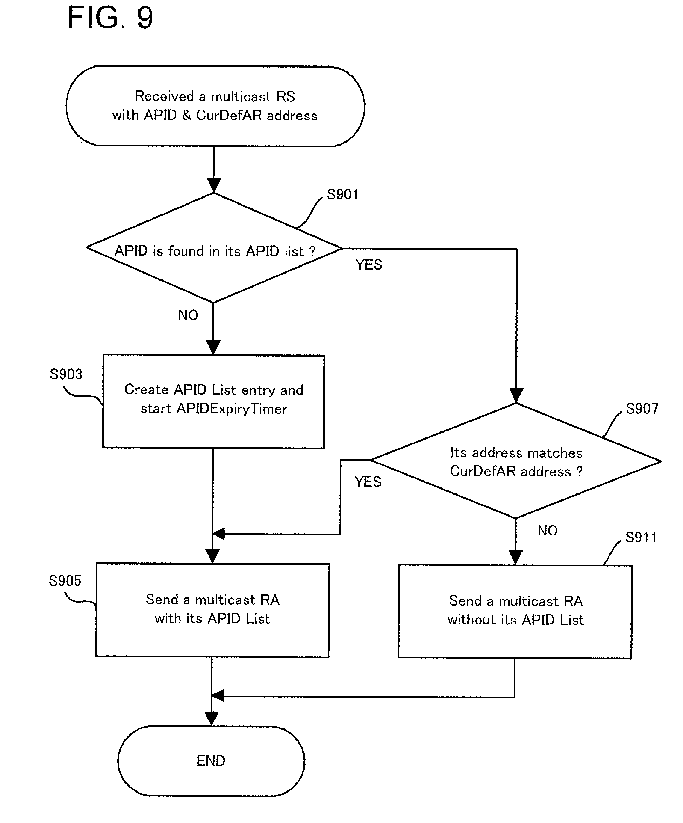

Meanwhile, the MN sends a multicast RS carrying the APID and the global scope address of its CurDefAR to all the other on-link ARs. For "Movement 1", the multicast RS is able to reach the MN's CurDefAR. In response, the CurDefAR must include its APID List in the multicast RA (step S213) sent to all the on-link MNs (corresponds to step S905 in Fig. 9) no matter whether the APID is found in its APID List. When APID is not found in its APID List, the APID reported by MN is added to the APID List. This is to ensure the MN reporting an APID gets its APID Cache updated by its CurDefAR in "Movement 1".

The other on-link ARs do not always include the APID List in the solicited RA. Unless the APID is found in their APID List (corresponds to the procedure when "NO" at step S901 is taken in Fig. 9), the APID List which the APID has been added to is included in RA (step S215, S217 and S219). Alternatively, if the APID is found in their APID List, RA is sent without the APID List (step S215 and S221). In other word, an AR except the CurDefAR disseminates its APID List only when an APID has never been reported and disseminated before. As such, bandwidth is not wasted in transmitting redundant APID Lists.

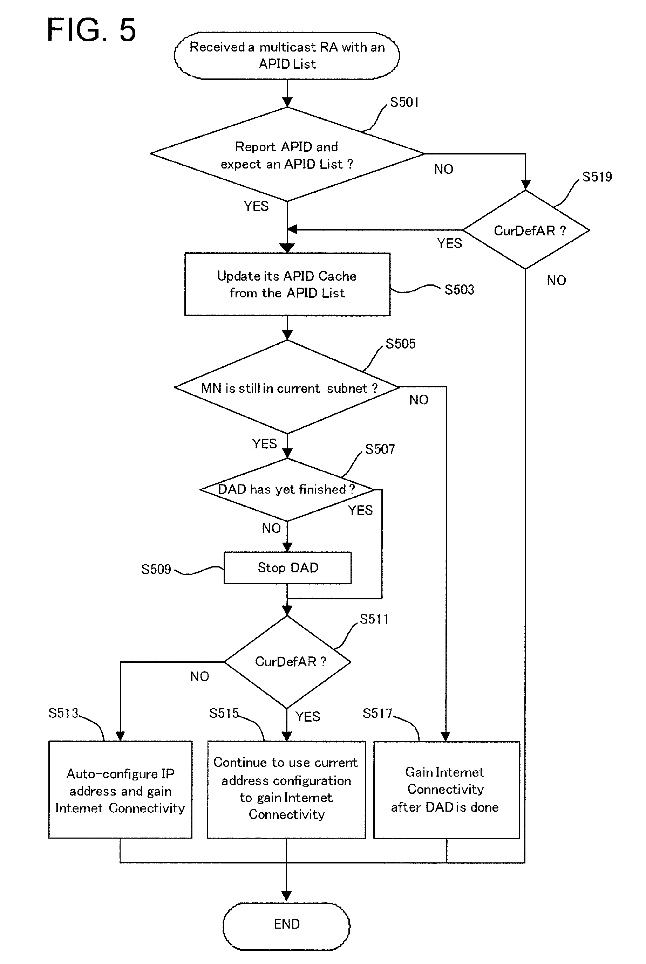

Having received the disseminated new APID List at step S213 or S221, the MN updates its APID Cache (step S223) and gains Internet connectivity (step S225). The more detailed operations are depicted in the flowchart of Fig. 5 and described as below.

In Fig. 5, the procedure of the MN is illustrated when the MN received a multicast RA with an APID List. The MN that reported the APID should update its APID Cache. If the RA is found from one of its current ARs, the MN perceives it is still in the current subnet and gains Internet Connectivity without the need to wait for the completion of DAD. In other word, the MN waits for receiving the APID List after reporting the APID ("YES" at step S501), and updates its APID cache with the APID List after receiving the RA (step S503). Specifically, when the MN has perceived it is still in the current subnet ("YES" at step S505) and DAD is not completed ("NO" at step S507), the running RetransTimer is stopped and DAD is halted (step S509).

If the AR is the MN's CurDefAR ("YES" at step S511), the MN can proceed to use current IP address configuration. Otherwise, if the AR is the MN' s CurDefAR ("NO" at step S511), an IPv6 address is auto-configured according to the received RA (step S513). When the MN can't perceive it is still in the current subnet ("NO" at step S505), MN gains Internet connectivity after DAD is completed (step S517).

If a MN passively receives an RA with an APID List ("NO" at step S501), MN verifies if the source of RA is its CurDefAR (step S519). When the source of RA is its CurDefAR, the above-mentioned step S503 is taken. When only the CurDefAR and PreDefAR are stored in the APID cache of MN and the source of RA is not its CurDefAR ("NO" at step S519), MN does not perform the updates concerning the APID.

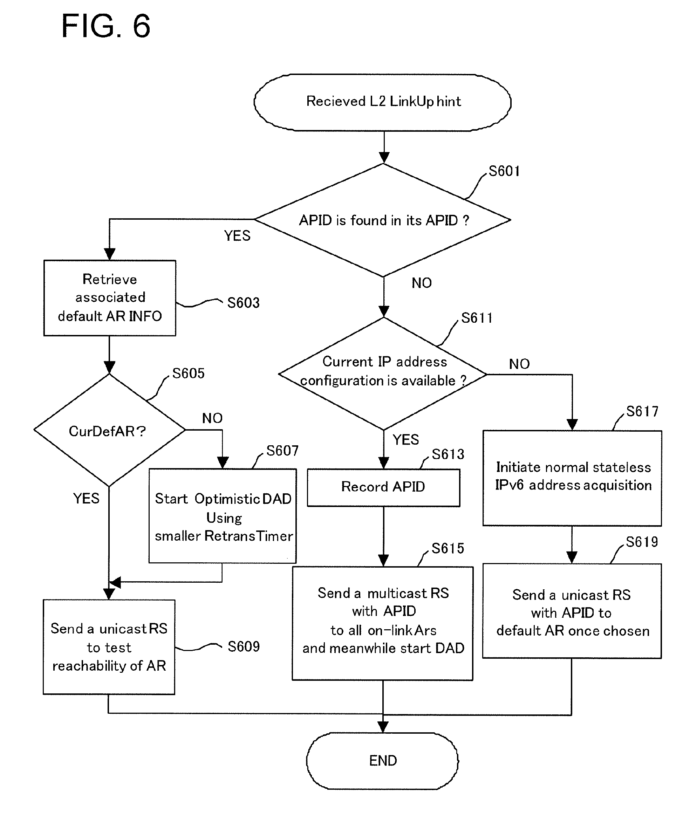

For "Movement 4" and "Movement 7", the normal stateless IPv6 address auto-configuration is used as shown in the upper part (steps S301 to S309) of Fig. 3. This corresponds to the procedure when "NO" at step S611 is taken in Fig. 6 to be described. In the address auto-configuration, DAD and router discovery are performed parallelly after the MN received a L2 LinkUp hint (step S301), and the MN can only use unspecified address in the RS. DAD includes the steps of sending the NS (Neighbor Solicitation) (step S303) and starting a RetransTimer (step S305), and router discovery includes the step of sending the router solicitation (step S307). Thus, the on-link ARs have to multicast the solicited RA by RS (step S309). After the auto-configuration, the MN gains Internet connectivity (step S311) and chooses one AR as its default router. The MN has to report the APID to this AR (the source of RA) and thus the MN sends the router solicitation with the APID (step S313). Therefore, the MN receives the router advertisement with the updated APID List (step S315), and updates the MN's APID Cache (step S317).

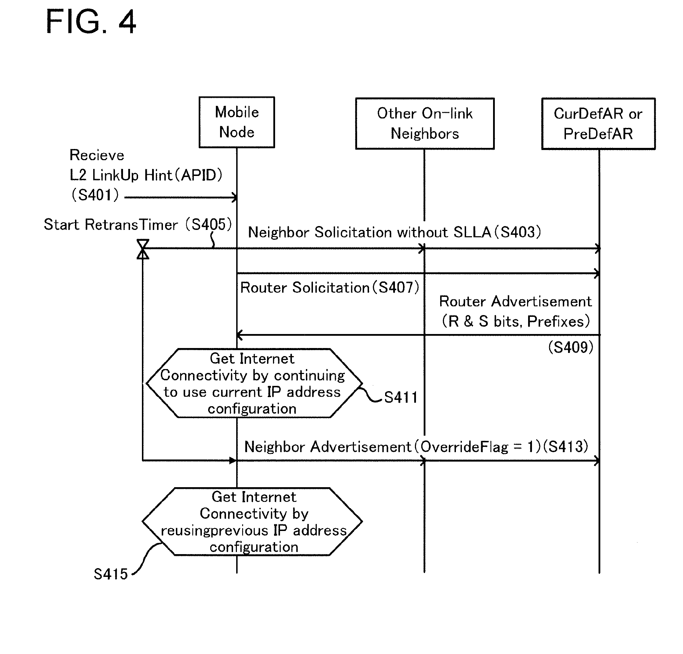

Fig. 4 shows the signaling diagram of the reachability test and reusability ascertainment procedures used by "Movement 2", "Movement 3" and "Movement 6". Unlike Figs. 2 and 3, the APID supplied in the L2 LinkUp hint received at step S401 is found in a MN's APID Cache (corresponds to the procedure when "YES" at step S601 is taken in Fig. 6 to be described). The default AR information of the APID Cache entry is retrieved.

If the AR is CurDefAR, the MN realizes it remains in the current subnet. Compared to the normal address auto-configuration in Fig. 3, the MN only needs to perform the reachability test due to sending the router solicitation at step S407, in which RS/RA are exchanged between the MN and its CurDefAR both in unicast. The MN continues to use current IP address configuration and gains Internet connectivity (step S411) right after the reachability test.

If the AR is its PreDefAR (corresponds to the procedure when "NO" at step S605 is taken in Fig. 6 to be described), the MN realizes it moves back to a previous subnet. DAD at steps S403 and S405 should be performed since the MN is away from the subnet for some time. In order for the DAD to be done in parallel with the reachability test where RS/RA is exchanged in unicast at steps S407 and S409, Optimistic DAD is chosen. The MN is able to use its previous IP address as tentative address to communicate with others until the completion of DAD. According to Optimistic DAD, the Source Link Local Address (SLLA) must not be included in the Neighbor Solicitation to avoid modifying the Neighbor Caches of other neighbors receiving the NS. The MN should also keep the link-layer address of its PreDefAR, in order to unicast RS to its PreDefAR.

On the other hand, a RetransTimer can use a smaller expiry value in the Optimistic DAD as the existence of the APID Cache entry implies less possibility of address duplication. A Neighbor Advertisement with the OverrideFlag set is sent (step S413) to update the Neighbor Caches after the RetransTimer expires, i.e. no duplicate address is found. The previous address configuration is reused and Internet connectivity is gained immediately at step S415.

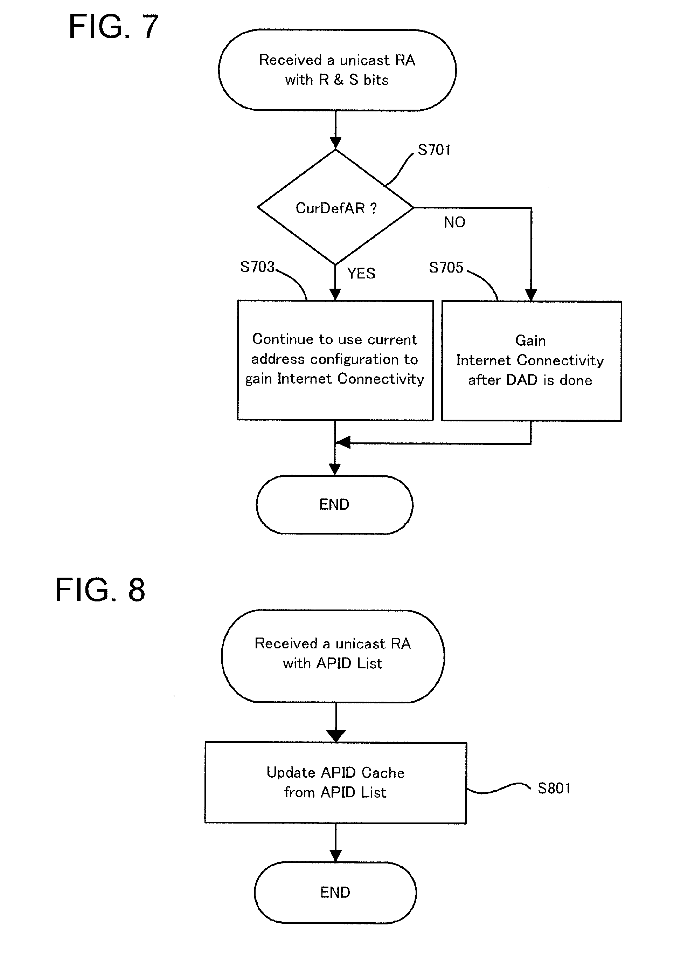

Figs. 5 to 8 show the MN operations required for the proposed DNA method. Fig. 5 is as described in the above description. In addition to the above-mentioned references, the procedure when "YES" at step S701 in Fig. 7 is taken corresponds to the procedure at step S411 in Fig. 4, and the procedure when "NO" at step S701 in Fig. 7 is taken corresponds to the procedure at step S413 in Fig. 4. Furthermore, the procedure at step S801 in Fig. 8 refers to the procedure at step S317 in Fig. 3.

In Fig. 6, the procedures of the MN are illustrated when the MN received a L2 LinkUp hint. After the MN received a L2 LinkUp hint, the MN verifies if the APID included in the L2 LinkUp hint is found in its APID cache (step S601). If the APID is found in the APID cache ("YES" at step S601), the MN retrieves associated default AR information (step S603), and verifies if the AR is its CurDefAR (step S605). If the AR is its CurDefAR ("YES" at step S605, the MN sends a unicast RS and performs the reachability test (step S609). On the other hand, if the AR is not its CurDefAR ("NO" at step S605), the MN starts Optimistic DAD with a smaller RetransTimer (step S607), and then performs the reachability test of step S609.

When the APID is not found in it's the APID cache ("NO" at step S601) and if current IP address configuration is available ("YES" at step S611), the MN records the APID (step S613), sends a multicast RS with the APID to all the on-link ARs and starts DAD (step S615). On the other hand, if current IP address configuration is unavailable ("NO" at step S611), the MN initiates normal stateless IPv6 address acquisition (step S617), and sends a unicast RS with the APID to the default router once chosen (step S619).

In Fig. 7, the procedures of the MN are illustrated when the MN received a unicast RA with R and S bits. When the MN received a unicast RA with R and S bits, it verifies if the RA source is its CurDefAR (step S701). The MN continues to use current IP address configuration to gain Internet connectivity (step S703) if the RA source is its CurDefAR ("YES" at step S701), while the MN gains Internet connectivity after performing DAD (step S705) if the RA source is not its CurDefAR ("NO" at step S701).

In Fig. 8, the procedures of the MN are illustrated when the MN received a unicast RA with the APID List. When the MN received a unicast RA with the APID List, it updates its own APID cache with the APID List (step S801).

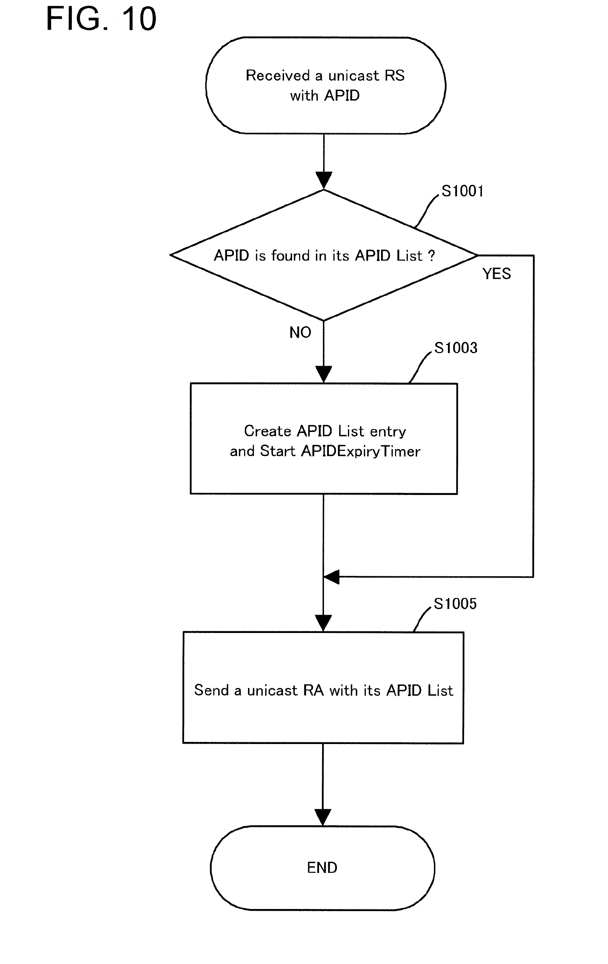

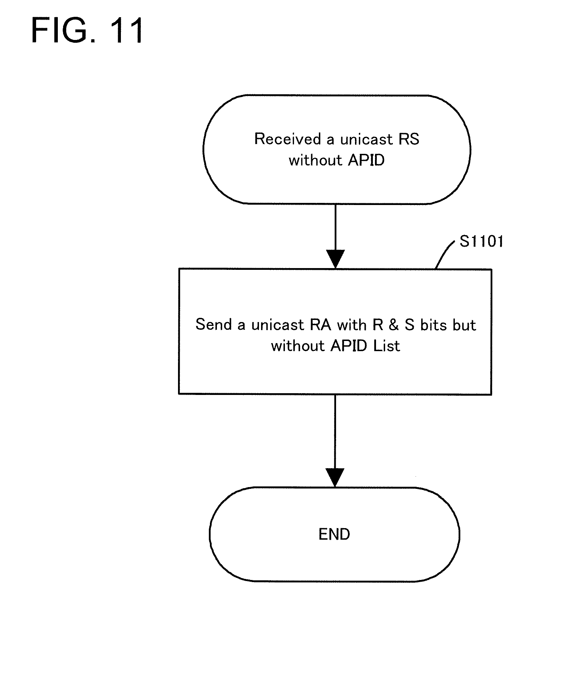

Figs. 9 to 11 summarize the AR operations required for the proposed DNA method. In addition to the references in the description of Fig. 2, the procedure at step S1005 in Fig. 10 corresponds to the APID List dissemination in Fig. 3 (step S315) and the procedure at S1101 in Fig. 11 corresponds to the reachability test in Fig. 4.

In Fig. 9, the procedures of the AR are illustrated when the AR received a multicast RS with the APID and CurDefAR address. After receiving a multicast RS with the APID and CurDefAR address, the AR verifies if the APID included in the multicast RS is found in its APID cache (step S901). If the APID is not found in the APID cache ("NO" at step S901), the AR creates the APID List entry and starts an APID timer in order to know whether the validity period of the APID expires or not (step S903). The AR then sends a multicast RA with the APID List (step S905).

If the APID is found in the APID cache ("YES" at step S901), the AR verifies if the address associated with the APID in the APID cache matches CurDefAR address (step S907). If the address matches CurDefAR address ("YES" at step S907), the step S905 is taken where the AR sends a multicast RA with the APID. If the address does not match CurDefAR address ("NO" at step S907), the AR sends a multicast RA without the APID List (step S911).

In Fig. 10, the procedures of the AR are illustrated when the AR received a unicast RS with the APID. After receiving a unicast RS with the APID, the AR verifies if the APID included in the unicast RS is found in its APID cache (step S1001) . If the APID is not found in the APID cache ("NO" at step S1001), the AR creates the APID List entry, starts an APID timer in order to know whether the validity period of the APID expires or not (step S1003), and sends a unicast RA with the APID List (step S1005). If the APID is found in the APID cache ("YES" at step S1001), the step S1005 is taken where the AR sends a unicast RA with the APID List.

In Fig. 11, the procedures of the AR are illustrated when the AR received a unicast RS without the APID. After receiving a unicast RS without the APID, the AR sends a unicast RA with R and S bits, but without the APID List (step S1101).

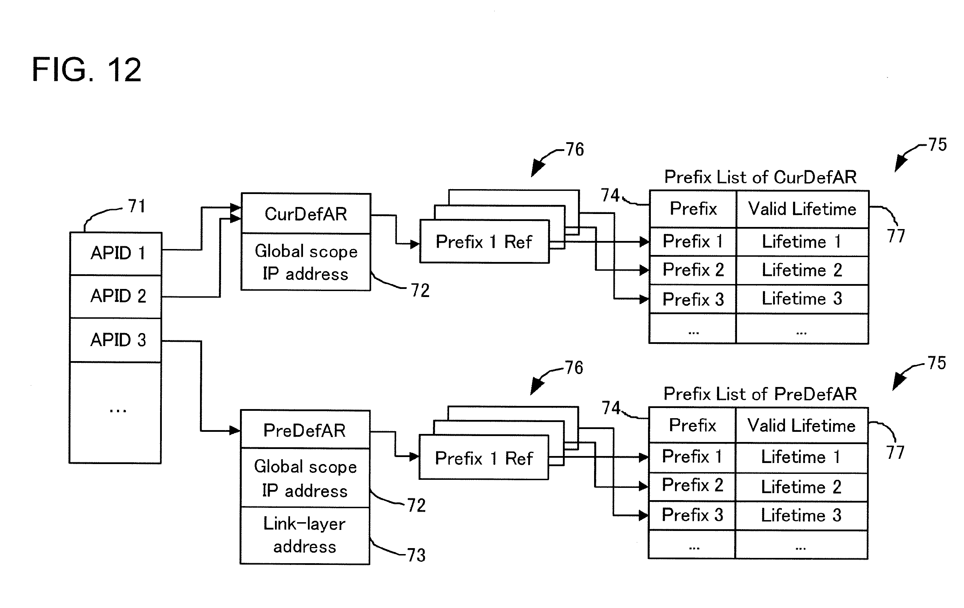

In Fig. 12, the structure of an APID Cache is shown. APID Cache entries (hereinafter, also referred to as entries) are created from the APID List and the Prefix Information option of RAs sent by the MN's CurDefAR or PreDefAR. For instance, each entry contains the APID 71 of an AP, the global scope IPv6 address (or global scope IP address) 72 of the CurDefAR or PreDefAR, the link-layer address 73 of PreDefAR, and the prefix (es) 74 advertised by the CurDefAR or PreDefAR.

The global scope IPv6 addresses (or global scope router addresses) 72 are extracted from an RA with the R bit set and the Prefix Information option. The global scope router addresses 72 are used by the MN to unambiguously identify whether the sender of the RA is the CurDefAR or PreDefAR. As mentioned earlier, the link layer addresses 73 are used when sending the unicast RS during the reachability test. The APID 71 is chosen as the primary key for APID Cache entries. The prefix (es) 74 are stored in the MN' s Prefix List 75, as defined in Non-Patent Document 1 (RFC2461). As such, only the pointer(s) (Prefix Reference Information) 76 to the prefix(es) are stored in the APID cache.

When MNs move around in a wireless access network with a lot of APs, the size of their APID Cache may grow indefinitely. To limit the storage needed for the APID Cache, a MN can use the following method to garbage-collect old entries. Once the valid lifetime 77 of a prefix expires, the corresponding prefix pointer 76 is removed. If all its associated prefix pointers 76 are removed, a router address elements (global scope IPv6 address 72 and link-layer address 73) should be removed. An APID Cache entry of the APID 71 is purged when both the PreDefAR and CurDefAR address elements are removed.

An AR needs to maintain an APID list of all the on-link APs that it can learn about. The size of APID list may also grow indefinitely. To limit the storage needed for the APID List, each APID List entry is created and associated with a lifetime timer when a new APID is reported. The AR should reset and restart the timer when the APID is reported again. The APID List entry is purged when the timer expires.

In case that the DHCP (Dynamic Host Configuration Protocol) server resides in the network, for example, the MN can record information obtained from the DHCP server, or manage a list including relationship between this DHCP server and the AP or AR. In this way, the similar advantage obtained from the present invention is achieved in more complicate network compositions.

### INDUSTRIAL APPLICABILITY

The present invention has the advantage of attaining fast processing on network attachment detection for IPV6 wireless access networks and reduction of signaling volume. The present invention can be applied to the technology of network attachment detection for wireless network using IPv6 protocol.

## Claims

1. A method for providing fast network attachment detection with less signaling for IPv6 wireless access networks, comprising the steps of:
reporting, by a mobile node, an identifier of an unknown access point to one or more access routers on a same link;
disseminating, by the access routers, on-link access point identifiers;
ascertaining, by the mobile node, the reachability of its current default router, or the reachability of its previous default router and remaining uniqueness of its previous address; and
reusing, by the mobile node, its current or previous IPv6 address configuration to quickly gain Internet connectivity.

2. The method according to claim 1, wherein the identifier of an access point obtainable from a L2 LinkUp hint is used to distinguish whether a point of attachment has been visited when a new L2 link is established.

3. The method according to claim 1, wherein the identifier of an unknown access point is reported by the mobile node to all the on-link access routers in a multicast Router Solicitation.

4. The method according to claim 1, wherein the identifier of an unknown access point is reported by the mobile node to the mobile node's default access router chosen after normal address auto-configuration, in a unicast Router Solicitation.

5. The method according to claim 1, wherein the access routers disseminate a list of the on-link access point identifiers in a multicast Router Advertisement.

6. The method according to claim 1, wherein the mobile node's default access router disseminates a list of the on-link access point identifiers in a unicast Router Advertisement.

7. The method according to claim 1, wherein the mobile node ascertains the reachability of its current or previous default access router by sending a unicast Router Solicitation without the Source Link Layer Address option, right after receiving the L2 LinkUp hint, and waiting for a solicited Router Advertisement.

8. The method according to claim 1, wherein the mobile node's current or previous default access router send back a unicast Router Advertisement with its global scope IPv6 address and a Solicitation bit set.

9. The method according to claim 1, wherein the mobile node starts Optimistic Duplicate Address Detection with a smaller RetransTimer value, upon receiving the L2 LinkUp hint, to verify the remaining uniqueness of the previous address in a previously visited subnet.

10. The method according to claim 1, wherein the mobile node continues to use its current IPv6 address configuration to quickly gain Internet connectivity after ascertaining the reachability of the current default access router.

11. The method according to claim 1, wherein the mobile node reuses its previous IPv6 address configuration to quickly gain Internet connectivity after ascertaining the reachability of the previous default access router and completion of Optimistic Duplicate Address Detection.

12. The method according to claim 3, wherein a global scope IPv6 address of the mobile node's current default access router is included in a Router Solicitation, and wherein the current default access router uses this information to identify itself and sends out a multicast Router Advertisement with a list of the on-link access point identifiers.

13. The method according to claim 5, wherein access routers which are not the mobile node' s current default access router, do not disseminate a list of the on-link access point identifiers in a solicited multicast Router Advertisement if the access routers has already known a reported access point identifier.

14. A system for storing information of known access point identifiers on a mobile node supporting a fast network attachment detection mechanism, the information of the known access point identifier comprising:
an identifier of the access point;
a global scope IPv6 address of a mobile node' s current default access router;
a global scope IPv6 address and a link layer address of a mobile node's previous default access router, and
a prefix advertised by the default access router.

15. A system for storing information of known access point identifiers on a mobile node supporting a fast network attachment detection mechanism, the information of the access point identifier comprising:
an identifier of the access point;
a global scope IPv6 address of a mobile node's current default access router;
a global scope IPv6 address and a link layer address of a mobile node's previous default access router, and
prefix reference information to specify a prefix of the mobile node.

16. A method for maintaining a cache of access point identifiers on a mobile node, comprising the steps of:
creating an access point identifier cache entry when an unknown access point identifier is found in a disseminated identifier list;
removing a prefix reference element of an entry when valid lifetime of a prefix expires;
removing a default access router element of the entry when associated prefix references are all removed; and
removing the access point identifier entry when the default access router element does not exist.

17. A method for maintaining a list of access point identifiers on an access router, comprising the steps of:
creating an access point identifier list entry when an unknown access point identifier is reported by a mobile node;
starting a lifetime timer when having created the access point identifier list entry;
refreshing the access point identifier list entry when the identifier is reported again by resetting and restarting an associated lifetime timer; and
removing the access point identifier list entry when the associated lifetime timer expires.
